# EUROPEAN PATENT APPLICATION

(11) **EP 2 525 081 A1**
(43) Date of publication of application: **21.11.2012**
(21) Application number: 10841855.9
(22) Date of filing: 25.10.2010
(51) Int. Cl.: F03D 1/06

(54) **SEGMENTED WIND WHEEL BLADE FOR WIND GENERATING SET AND ASSEMBLYING METHOD THEREOF**

(30) Priority: 11.01.2010 CN 201010033771
(71) Applicant: Sinovel Wind Group Co., Ltd, Haidian District, Beijing 100872 (CN)
(72) Inventor: WANG, Weifeng, Beijing 100872 (CN); JIN, Baonian, Beijing 100872 (CN); LIU, Zuohui, Beijing 100872 (CN); DANG, Qun, Beijing 100872 (CN); WANG, Shuai, Beijing 100872 (CN)
(74) Representative: McCartney, Jonathan William
(86) International application number: PCT/CN2010/001688
(87) International publication number: WO 2011/082511

(57) **Abstract**

A segmented wind wheel blade for a wind generating set and the assembling method thereof are disclosed. The segmented wind wheel blade includes a blade root section (1) adjacent to a hub side and at least one radial blade sides (2). Main beams (3) are embedded inside both the blade root section (1) and the radial blades (2). The blade root section (1) and each radial blade (2) are successfully connected end to end through the main beams (3). The effects of great connection intensity and less pneumatic loss can be realized by the segmented wind wheel blade.

## Description

### Technical field of the invention

This invention relates to a wind rotor blades and the assembling method thereof, in particular to a segmented wind rotor blade for an oversize wind turbine generator system and the assembling method thereof.

### Background

At present, with reinforced people's consciousness of environmental protection, the application of wind power has become more widespread. The wind energy could be converted to electrical energy by means of the wind turbine generator system. The wind rotor blade is a core component of the wind turbine generator system, in which the electric quantity output of the wind turbine generator system depends directly on the sweep area of the wind rotor blade. As the unit capacity of the wind turbine generator system increases, the length of the wind rotor blade increases correspondingly, which results in some inconvenience during the production, transportation and assembly of the wind rotor blade. Therefore, the wind rotor blade can be produced in a segmented manner so as to reduce the size of the molds and the production plant, which provides an improved process for molding the blade and facilitates the transportation of the wind rotor blade to the site. The segmented wind rotor blade needs to be assembled into the blade completely in use. In the prior art, for assembling the wind rotor blade, fillers are added into the slots formed at the joints between the blades, separated fastener are used for connecting, and reinforced structure are superposed on the inner and outer surfaces, so that the segmented wind rotor blade are assembled. However, there are less considerations in the term of the load subjected by the wind rotor blade during operation, and the convenience of assembly at the site in the prior art. At the same time, the fastener and the superposed structure applied to the real engineering will result in insufficient strength at joints of the blades and more aerodynamic loss, etc.. Other disadvantages of the wind rotor blade are for example complicated assembly operation, high cost and high risk. There is a need for improving the existing structure of the segmented wind rotor blade and the assembling method thereof, since the assembling method is affected directly by the structure of the segmented wind rotor blade.

### Summary of the invention

In view of this, the main object of the invention is to provide a segmented wind rotor blade for wind turbine generator system with stable connection, less aerodynamic loss and simple operation.

In order to achieve the above object, the present invention provides a segmented wind rotor blade for wind turbine generator system, it comprising an blade root section close to a side of a hub and at least one radial blade, wherein the blade root section and the at least one radial blade are connected end to end to form a complete wind rotor blade via main girders connecting one by one which embedded into the both of the blade root section and the radial blade.

The end of the main girder in the blade root section far away from the hub is a connecting section of the main girder, in which the connecting section is hollow and the inner wall of the connecting section is formed along the spanwise of the wind rotor blade with inner grooves; the end of the main girder in the radial blade close to the hub is a leading connecting section extending beyond the end face of the radial blade, wherein the outer perimeter of the leading connecting section is formed along the spanwise of the wind rotor blade with outer dentation; the end of the main girder in radial blade far away from the hub is a trailing connecting section, the end face of which is flushed with the end face of the radial blade, wherein the trailing connecting section is hollow and the inner wall of the trailing connecting section is formed along the spanwise of the wind rotor blade with inner grooves; the leading connecting section of the main girder in the radial blade is inserted into the trailing connecting section of the main girder in the adj acent radial blade, so that the outer dentation of the leading connecting section are engaged with the inner grooves of the trailing connecting section, and the leading connecting section of the main girder in the radial blade adj acent to the blade root section is inserted into the connecting section of the main girder in the blade root section, so that the outer dentation of the leading connecting section are engaged with the inner grooves of the connecting section of the main girder in the blade root section; a flange disc is embedded at the leading connecting section of each radial blade and securely connected to the main girder of the radial blade, wherein a plurality of bolts are embedded at the end faces of the connecting section of the main girder in the blade root section and the trailing connecting section of the main girder in each radial blade and the flange disc is securely connected to the bolts via nuts; and an external shell is provided at the joint between the blade root section and each radial blade.

The cross-section of the trailing connecting section of the main girder in the radial blade is the same in shape as the cross-section of the leading connecting section of the main girder in the adjacent radial blade, and the cross-section of the connecting section of the main girder in the blade root section is the same in shape as the cross-section of the leading connecting section of the main girder in the radial blade adjacent to the blade root section; and the cross-section of the leading connecting section is "C" shape, "D" shape or "O" shape, the cross-section of the trailing connecting section is "C" shape, "D" shape or "O" shape, and the cross-section of the connecting section of the main girder in the blade root section is "C" shape, "D" shape or "O" shape.

The shapes of the inner grooves of the trailing connecting section of the main girder in the radial blade are the same as the shapes of the outer dentation of the leading connecting section of the main girder in the adj acent radial blade, wherein the inner grooves of the trailing connecting section are involute-shaped, triangular, rectangular or trapezoidal grooves and the outer dentation of the leading connecting section are involute-shaped, triangular, rectangular or trapezoidal dentation; the shapes of the inner grooves of the connecting section of the main girder in the blade root section are the same as the shapes of the outer dentation of the leading connecting section of the main girder in the radial blade adjacent to the blade root section, wherein the inner grooves of the connecting section of the main girder in the blade root section are involute-shaped, triangular, rectangular or trapezoidal grooves.

A metal disc for guiding is provided at the end face of the connecting section of the main girder in the blade root section and at the end face of the trailing connecting section of the main girder in the radial blade, and the flange disc resting on the metal disc is securely connected to the main girder having the metal disc through the bolts.

The metal disc has a thickness and is provided with inner dentation, the number of which is less than the number of the inner grooves in the end face of the main girder having the metal disc, and the inner dentation of the metal disc are aligned with a bulge between two adjacent inner grooves in the end face of the main girder having the metal disc.

The main girder is made from the composite material based on a carbon-fiber-reinforced body and resin.

The present invention also provides a method for assembling the segmented wind rotor blade for wind turbine generator system, the assembling method comprising steps of:
(1) providing a surface roughness treatment to the outer dentation and the inner grooves of the main girders in the blade root section and each radial blade;
(2) inserting the leading connecting section of the main girder in the radial blade adjacent to the blade root section into the connecting section of the main girder in the blade root section, so that the inner grooves of the connecting section in the blade root section are engaged with the outer dentation of the leading connecting section of the adjacent radial blade, and inserting the leading connecting section of the main girder in the radial blade into the trailing connecting section of the main girder in the adj acent radial blade, so that the outer dentation of the leading connecting section are engaged with the inner grooves of the trailing connecting section;
(3) bonding together the fitting faces of the outer dentation and the inner grooves of the main girders in the blade root section and each radial blade, by means of manually coating, dry forming or vacuum injection molding;
(4) securely connecting the flange disc to the bolts via nuts;
(5) using an external shell to envelop the gap at the joint between the blade root section and each radial blade.

With the segmented wind rotor blade for wind turbine generator system and the assembling method thereof, the effect of great connecting strength and less aerodynamic loss can be realized, while the segmented wind rotor blade for wind turbine generator system of the present invention is simple in structure and easy to assemble.

### Brief description of the drawings

Figure 1 is an exploding schematic view of the segmented wind rotor blade for wind turbine generator system in accordance with the invention;
Figure 2 is a sectional view of the blade root section or radial blade in accordance with the invention;
Figure 3 is a schematic view of the main girder connecting portion in accordance with the invention;
Figure 4 is a schematic view of connecting status between the connecting section and the leading connecting section or between the trailing connecting section and the leading connecting section in accordance with the invention;
Figure 5 is an exploding schematic view of the assembled segmented wind rotor blade for wind turbine generator system in accordance with the invention;
Figure 6 is an exploding schematic view of connecting status of the assembled segmented wind rotor blade for wind turbine generator system in accordance with the invention;
Figure 7A is a sectional view of the connecting section or trailing connecting section and the leading connecting section in accordance with the invention;
Figure 7B is another sectional view of the connecting section or trailing connecting section and the leading connecting section in accordance with the invention;
Figure 7C is a third sectional view of the connecting section or trailing connecting section and the leading connecting section in accordance with the invention.

### Detailed description of the embodiments

In order to facilitate understanding of the structure and the effect of this invention, a detailed description of preferred embodiments will now be made with reference to the companying drawings.

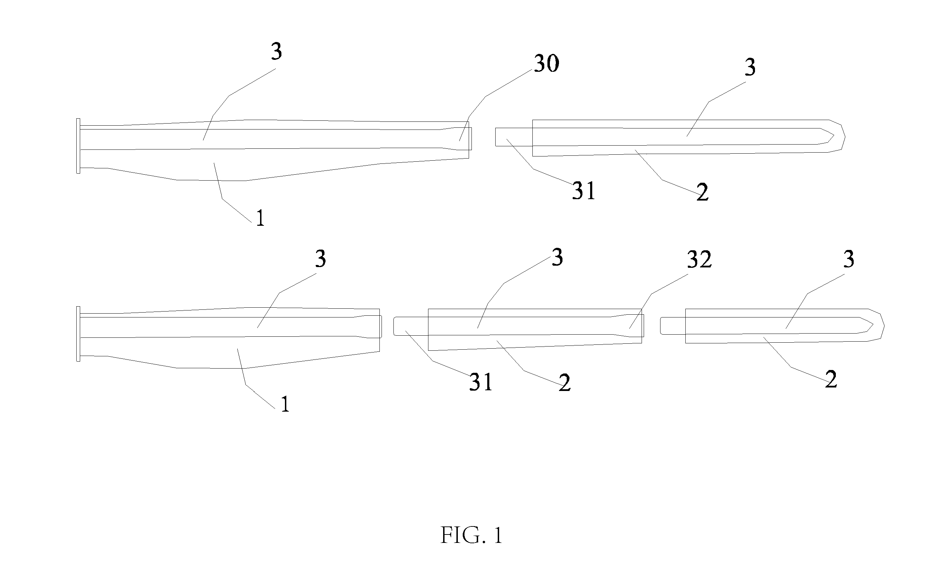

The wind rotor blade in this invention is a multi-segmented wind rotor blade, as shown in Figure 1, which comprises an blade root section 1 and at least one radial blade 2, wherein the blade root section 1 and each radial blade 2 are connected end to end to form a complete wind rotor blade via main girders 3 which embedded into the both of the blade root section 1 and the radial blade 2.

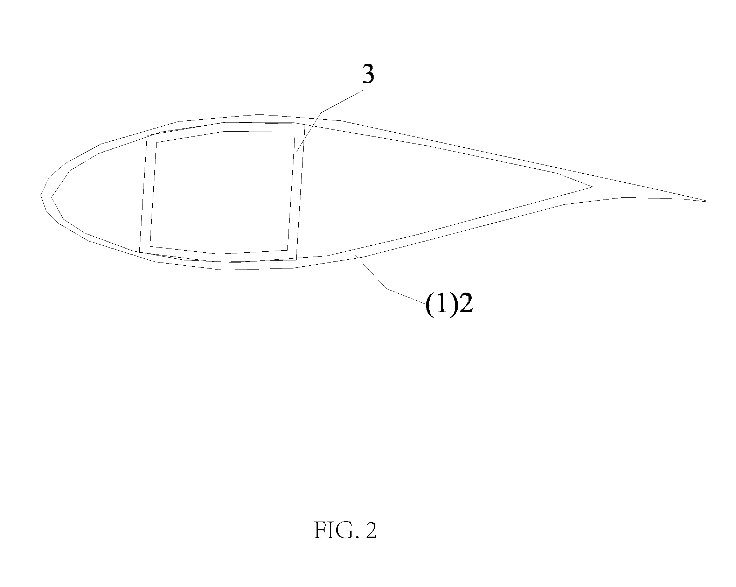

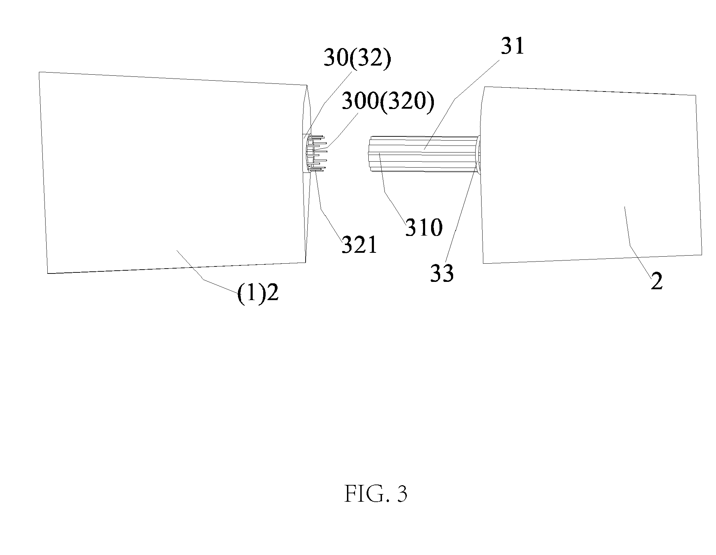

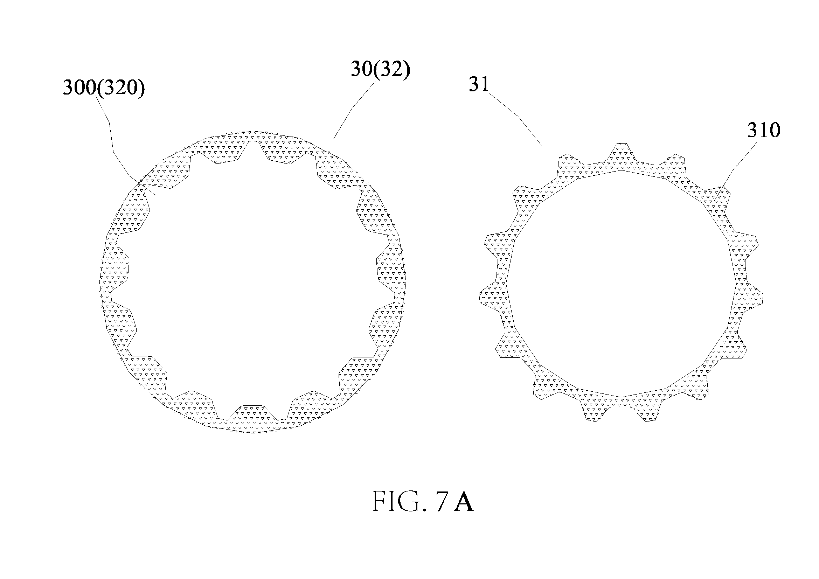

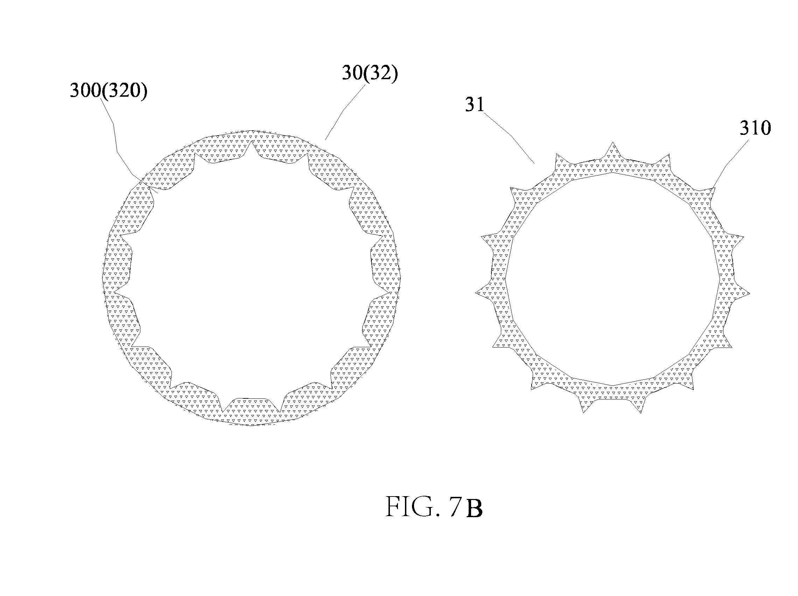

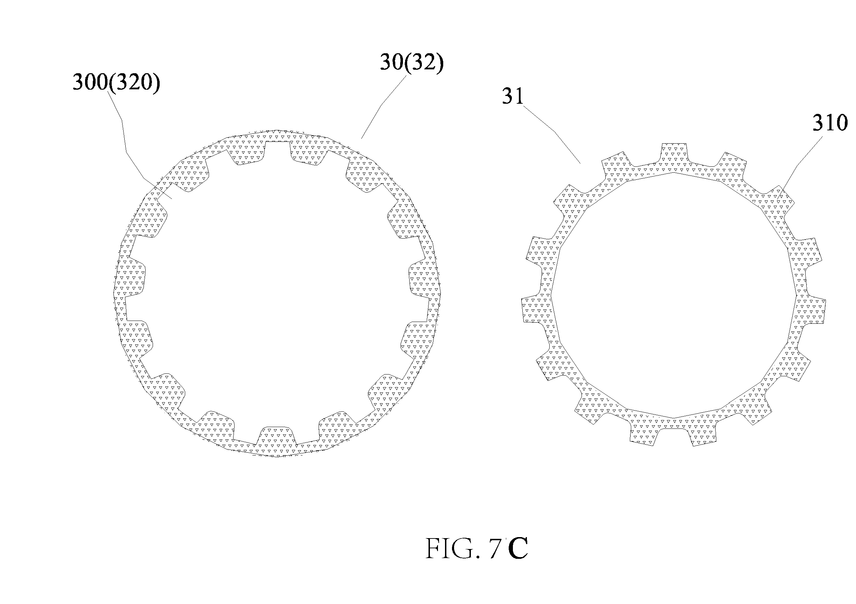

As shown in Figure 3, the blade root section 1 of the wind rotor blade in this invention is close to a side of a hub. The blade root section 1 is securely connected with the main girder 3 therein during manufacture. The end face of the blade root section 1 far away from the side of the hub is flushed with the end face of the main girder 3. The end of the main girder 3 in the blade root section far away from the side of the hub is a connecting section 30 of the main girder 3, in which the connecting section 30 of the main girder 3 is hollow and has "C" shape, "D" shape or "O" shape (e.g. "D" shape as shown in figure 2) in cross-section. For example, the cross-section of the connecting section 30 is "O" shape. The inner wall of the connecting section 30 is formed along the spanwise of the wind rotor blade with inner grooves 300 which are involute-shaped, triangular, rectangular or trapezoidal grooves (as shown in Figure 7A to Figure 7C).

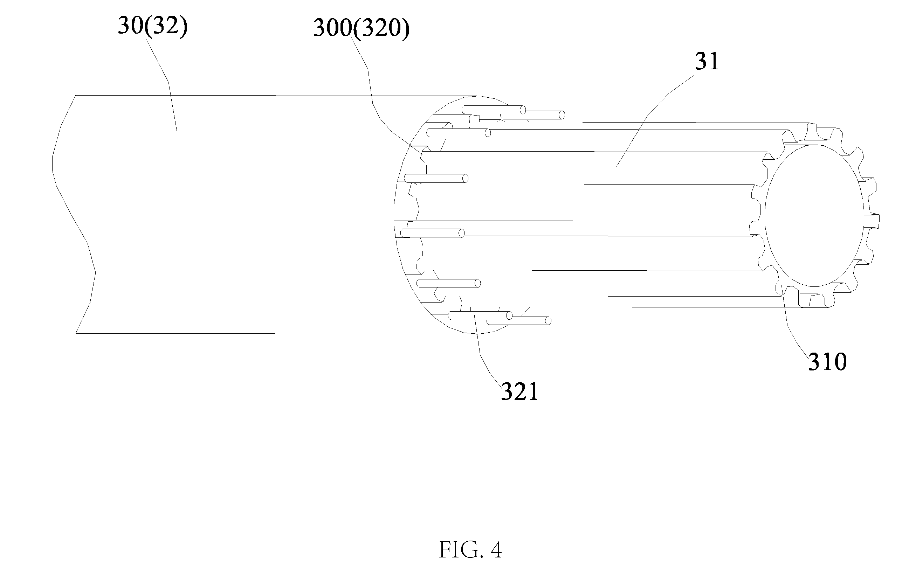

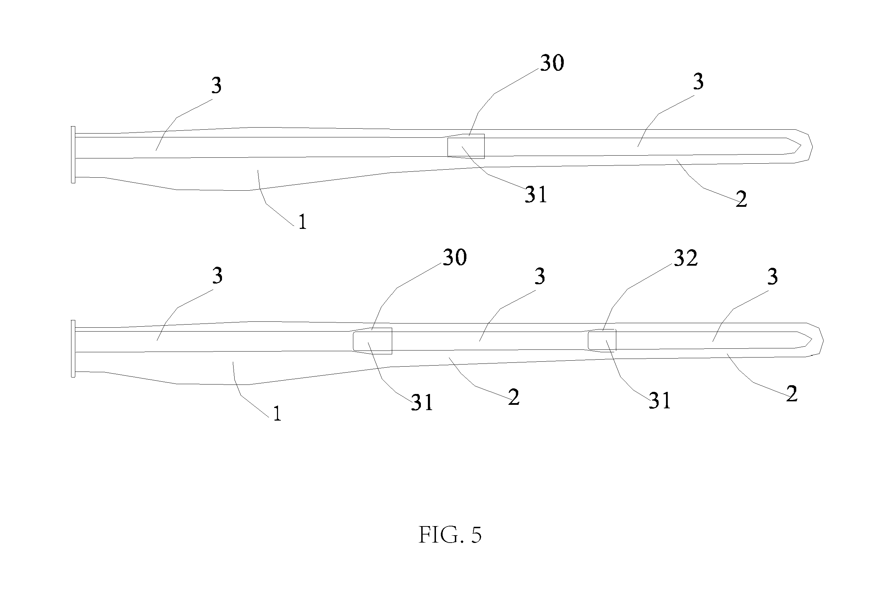

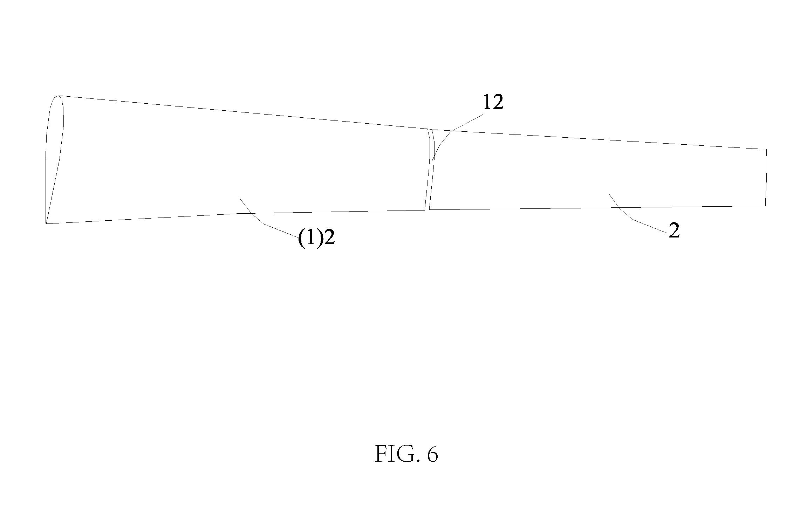

In this invention, each radial blade 2 is securely connected with the main girder 3 embedded therein during manufacture. As shown in Figure 3 and Figure 4, the end of the main girder 3 in the radial blade 2 close to the hub is a leading connecting section 31 extending beyond the end face of the radial blade 2. The leading connecting section 31 of the main girder 3 in radial blade 2 has "C" shape, "D" shape or "O" shape (e.g. "O" shape as shown in the drawings) in cross-section. The outer perimeter of the leading connecting section 31 is formed along the spanwise of the wind rotor blade with outer dentation 310 which are involute-shaped, triangular, rectangular or trapezoidal dentation (as shown in Figure 7A to Figure 7C). The end of the main girder 3 in radial blade 2 far away from the hub is a trailing connecting section 32, the end face of which is flushed with the end face of the radial blade 2. The trailing connecting section 32 is hollow and has a cross-section the same as the cross-section of the leading connecting section 31 of the main girder 3 in the adjacent radial blade 2, i.e. the trailing connecting section 32 also has "C" shape, "D" shape or "O" shape (e.g. "O" shape as shown in the drawings) in cross-section. The inner wall of the trailing connecting section 32 is formed along the spanwise of the wind rotor blade with inner grooves 320 which are involute-shaped, triangular, rectangular or trapezoidal grooves (as shown in Figure 7A to Figure 7C). The shapes of the inner grooves 320 are to the same as those of the outer dentation 310 of the outer perimeter of the leading connecting section 31 of the main girder 3 in the adjacent radial blade 2. The cross-section of the leading connecting section 31 of the radial blade 2 adjacent to the blade root section 1 is the same in shape as the cross-section of the connecting section 30 in the blade root section 1, and the shapes of the outer dentation 310 of the leading connecting section 31 of the radial blade 2 are the same as the shapes of the inner grooves 300 of the connecting section 30 in the blade root section 1. As shown in Figure 5 and Figure 6, the leading connecting section 31 of the main girder 3 in the radial blade 2 is inserted into the trailing connecting section 32 of the main girder 3 in the adjacent radial blade 2, so that the outer dentation 310 of the leading connecting section 31 are engaged with the inner grooves 320 of the trailing connecting section 32. The leading connecting section 31 of the main girder 3 in the radial blade 2 adjacent to the blade root section 1 is inserted into the connecting section 30 of the main girder 3 in the blade root section 1, so that the inner grooves 300 of the connecting section 30 in the blade root section 1 are engaged with the outer dentation 310 of the leading connecting section 31 of the adjacent radial blade 2.

The blade root section 1 is connected with each radial blade 2 through the outer dentation of the main girder 3 inserted into the inner grooves of the main girder 3, so as to form complete wind rotor blade. The fitting faces of the outer dentation and the inner grooves are bonded together, for example, by means of manually coating, dry forming and/or vacuum injection molding, so that the connecting strength between the blade root section 1 and each radial blade 2 is improved. Prior to assembling the segmented wind rotor blade, a surface roughness treatment can be made to the outer dentation and the inner grooves of the main girder 3, for example, grinding, sandblasting etc., so that they have surface roughness in the level of millimeter. Alternatively, the surfaces of the outer dentation and the inner grooves can be formed with dentation grooves in the form of rectangle, triangle etc. with surface roughness in the level of centimeter. As the roughness increases, the surface area of the outer dentation and the inner grooves of the main girder 3 increases, so that the bonding area between the surfaces of the outer dentation and the inner grooves of the main girder 3 and the adhesive increases, and thus the bonding strength increases. Since the wind rotor blade will be subjected to centrifugal force in operation, a flange disc 33 is embedded at the location of the leading connecting section 31 of each radial blade 2 near the radial blade 2 (as shown in Figure 3) to further increase the connecting strength between the blade root section 1 and each radial blade 2. The flange disc 33, the edge of which is formed with through holes, is securely connected to the main girder 3 of the radial blade 2. A plurality of bolts 321 are embedded at the end face of the connecting section 30 of the main girder 3 in the blade root section 1 and the end face of the trailing connecting section 32 of the main girder 3 in each radial blade 2 (as shown in Figure 3 and Figure 4). After the blade root section 1 connected with each radial blade 2, the inner grooves are bonded to the outer dentation of the main girder 3, and then the flange disc 33 is securely connected to the bolts 321 via nuts, with the flange disc 33 also acting to assist positioning during the assembling. Each girder is provided at its end face having the bolts 321 with a metal disc (not shown in the figure) for guiding. The metal disc has a thickness and is provided with several inner dentation, the number of which is less than the number of the inner grooves in the end face of the main girder 3 having the metal disc. The inner dentation of the metal disc are aligned with a bulge between two adjacent inner grooves in the end face of the main girder 3 having the metal disc, so that a recess between the two adjacent outer dentation 310 of the leading connecting section 31 of the radial blade 2 is engaged with the inner dentation of the metal disc, and the leading connecting section 31 of the radial blade 2 is therefore inserted readily into the trailing connecting section 32 of the adjacent radial blade 2 or the connecting section 30 of the blade root section 1. Once assembling the wind rotor blade, the flange disc 33 resting on the metal disc is securely connected to the main girder 3 having the metal disc through the bolts 321. After the assembling of the wind rotor blade, since there is a gap at the joint between the blade root section 1 and each radial blade 2, an external shell 12 (as shown in Figure 6) is used to envelop the gap, so that the aerodynamic loss is reduced and the connection strength is further improved.

Therefore, the steps of assembling the wind rotor blade of the invention are as follows:
(1) providing a surface roughness treatment to the outer dentation and the inner grooves of the main girders in the blade root section and each radial blade;
(2) Inserting the leading connecting section of the main girder in the radial blade adjacent to the blade root section into the connecting section of the main girder in the blade root section, so that the inner grooves of the connecting section in the blade root section are engaged with the outer dentation of the leading connecting section of the adjacent radial blade, and inserting the leading connecting section of the main girder in the radial blade into the trailing connecting section of the main girder in the adj acent radial blade, so that the outer dentation of the leading connecting section are engaged with the inner grooves of the trailing connecting section;
(3) bonding together the fitting faces of the outer dentation and the inner grooves of the main girders in the blade root section and each radial blade, by means of manually coating, dry forming and/or vacuum injection molding;
(4) securely connecting the flange disc to the bolts via nuts;
(5) using an external shell to envelop the gap at the joint between the blade root section and each radial blade.

In this invention, the main girder is made from the composite material based on a carbon-fiber-reinforced body and resin.

For the above description of the invention, the preferred embodiments of the present invention are provided by way of the example, and are not used to limit the scope of protection of the present invention.

## Claims

1. A segmented wind rotor blade for wind turbine generator system, **characterized in that**, it comprises an blade root section close to a side of a hub and at least one radial blade, wherein the blade root section and each radial blade are connected end to end via main girders connecting one by one which embedded into the both of the blade root section and each radial blade; the end of the main girder in the blade root section far away from the hub is a connecting section of the main girder, in which the connecting section is hollow and the inner wall of the connecting section is formed along the spanwise of the wind rotor blade with inner grooves; the end of the main girder in the radial blade close to the hub is a leading connecting section extending beyond the end face of the radial blade, wherein the outer perimeter of the leading connecting section is formed along the spanwise of the wind rotor blade with outer dentation; the end of the main girder in radial blade far away from the hub is a trailing connecting section, the end face of which is flushed with the end face of the radial blade, wherein the trailing connecting section is hollow and the inner wall of the trailing connecting section is formed along the spanwise of the wind rotor blade with inner grooves; the leading connecting section of the main girder in the radial blade is inserted into the trailing connecting section of the main girder in the adjacent radial blade, so that the outer dentation of the leading connecting section are engaged with the inner grooves of the trailing connecting section, and the leading connecting section of the main girder in the radial blade adjacent to the blade root section is inserted into the connecting section of the main girder in the blade root section, so that the outer dentation of the leading connecting section are engaged with the inner grooves of the connecting section of the main girder in the blade root section; a flange disc is embedded at the leading connecting section of each radial blade and securely connected to the main girder of the radial blade, wherein a plurality of bolts are embedded at the end faces of the connecting section of the main girder in the blade root section and the trailing connecting section of the main girder in each radial blade and the flange disc is securely connected to the bolts via nuts; and an external shell is provided at the joint between the blade root section and each radial blade.

2. The segmented wind rotor blade for wind turbine generator system according to claim 1, **characterized in that**, the cross-section of the trailing connecting section of the main girder in the radial blade is the same in shape as the cross-section of the leading connecting section of the main girder in the adjacent radial blade, and the cross-section of the connecting section of the main girder in the blade root section is the same in shape as the cross-section of the leading connecting section of the main girder in the radial blade adjacent to the blade root section; and the cross-section of the leading connecting section is "C" shape, "D" shape or "O" shape, the cross-section of the trailing connecting section is "C" shape, "D" shape or "O" shape, and the cross-section of the connecting section of the main girder in the blade root section is "C" shape, "D" shape or "O" shape.

3. The segmented wind rotor blade for wind turbine generator system according to claim 2, **characterized in that**, the shapes of the inner grooves of the trailing connecting section of the main girder in the radial blade are the same as the shapes of the outer dentation of the leading connecting section of the main girder in the adj acent radial blade, wherein the inner grooves of the trailing connecting section are involute-shaped, triangular, rectangular or trapezoidal grooves and the outer dentation of the leading connecting section are involute-shaped, triangular, rectangular or trapezoidal dentation; the shapes of the inner grooves of the connecting section of the main girder in the blade root section are the same as the shapes of the outer dentation of the leading connecting section of the main girder in the radial blade adjacent to the blade root section, wherein the inner grooves of the connecting section of the main girder in the blade root section are involute-shaped, triangular, rectangular or trapezoidal grooves.

4. The segmented wind rotor blade for wind turbine generator system according to claim 1, **characterized in that**, a metal disc for guiding is provided at the end face of the connecting section of the main girder in the blade root section and at the end face of the trailing connecting section of the main girder in the radial blade, and the flange disc resting on the metal disc is securely connected to the main girder having the metal disc through the bolts.

5. The segmented wind rotor blade for wind turbine generator system according to claim 4, **characterized in that**, the metal disc has a thickness and is provided with inner dentation, the number of which is less than the number of the inner grooves in the end face of the main girder having the metal disc, and the inner dentation of the metal disc are aligned with a bulge between two adjacent inner grooves in the end face of the main girder having the metal disc.

6. The segmented wind rotor blade for wind turbine generator system according to claim 1, **characterized in that**, the main girder is made from the composite material based on a carbon-fiber-reinforced body and resin.

7. A method for assembling the segmented wind rotor blade for wind turbine generator system according to claim 1, **characterized in that**, the assembling method comprises steps of:
(1) providing a surface roughness treatment to the outer dentation and the inner grooves of the main girders in the blade root section and each radial blade;
(2) inserting the leading connecting section of the main girder in the radial blade adjacent to the blade root section into the connecting section of the main girder in the blade root section, so that the inner grooves of the connecting section in the blade root section are engaged with the outer dentation of the leading connecting section of the adjacent radial blade, and inserting the leading connecting section of the main girder in the radial blade into the trailing connecting section of the main girder in the adj acent radial blade, so that the outer dentation of the leading connecting section are engaged with the inner grooves of the trailing connecting section;
(3) bonding together the fitting faces of the outer dentation and the inner grooves of the main girders in the blade root section and each radial blade, by means of manually coating, dry forming or vacuum injection molding;
(4) securely connecting the flange disc to the bolts via nuts;
(5) using an external shell to envelop the gap at the joint between the blade root section and each radial blade.

## Amended claims

### Amended claims under Art. 19.1 PCT

**1.** A segmented wind rotor blade for wind turbine genertor system, **characterized in that**, it comprises an blade root section close to a side of a hub and a plurality of radial blades, wherein the blade root section and each radial blade are connected end to end via main girders connecting one by one which embedded into the both of the blade root section and each radial blade; the end of the main girder in the blade root section far away from the hub is a connecting section of the main girder, in which the connecting section is hollow and the inner wall of the connecting section is formed along the spanwise of the wind rotor blade with inner grooves; the end of the main girder in the radial blade close to the hub is a leading connecting section extending beyond the end face of the radial blade, wherein the outer perimeter of the leading connecting section is formed along the spanwise of the wind rotor blade with outer dentation; the end of the main girder in radial blade far away from the hub is a trailing connecting section, the end face of which is flushed with the end face of the radial blade, wherein the trailing connecting section is hollow and the inner wall of the trailing connecting section is formed along the spanwise of the wind rotor blade with inner grooves; the leading connecting section of the main girder in the radial blade is inserted into the trailing connecting section of the main girder in the adjacent radial blade, so that the outer dentation of the leading connecting section are engaged with the inner grooves of the trailing connecting section, and the leading connecting section of the main girder in the radial blade adjacent to the blade root section is inserted into the connecting section of the main girder in the blade root section, so that the outer dentation of the leading connecting section are engaged with the inner grooves of the connecting section of the main girder in the blade root section; a flange disc is embedded at the leading connecting section of each radial blade and securely connected to the main girder of the radial blade, wherein a plurality of bolts are embedded at the end faces of the connecting section of the main girder in the blade root section and the trailing connecting section of the main girder in each radial blade and the flange disc is securely connected to the bolts via nuts; and an external shell is provided at the joint between the blade root section and each radial blade.

**2.** The segmented wind rotor blade for wind turbine genertor system according to claim 1, **characterized in that**, the cross-section of the trailing connecting section of the main girder in the radial blade is the same in shape as the cross-section of the leading connecting section of the main girder in the adjacent radial blade, and the cross-section of the connecting section of the main girder in the blade root section is the same in shape as the cross-section of the leading connecting section of the main girder in the radial blade adjacent to the blade root section; and the cross-section of the leading connecting section is "C" shape, "D" shape or "O" shape, the cross-section of the trailing connecting section is "C" shape, "D" shape or "O" shape, and the cross-section of the connecting section of the main girder in the blade root section is "C" shape, "D" shape or "O" shape.

**3.** The segmented wind rotor blade for wind turbine genertor system according to claim 2, **characterized in that**, the shapes of the inner grooves of the trailing connecting section of the main girder in the radial blade are the same as the shapes of the outer dentation of the leading connecting section of the main girder in the adjacent radial blade, wherein the inner grooves of the trailing connecting section are involute-shaped, triangular, rectangular or trapezoidal grooves and the outer dentation of the leading connecting section are involute-shaped, triangular, rectangular or trapezoidal dentation; the shapes of the inner grooves of the connecting section of the main girder in the blade root section are the same as the shapes of the outer dentation of the leading connecting section of the main girder in the radial blade adjacent to the blade root section, wherein the inner grooves of the connecting section of the main girder in the blade root section are involute-shaped, triangular, rectangular or trapezoidal grooves.

**4.** The segmented wind rotor blade for wind turbine genertor system according to claim 1, **characterized in that**, a metal disc for guiding is provided at the end face of the connecting section of the main girder in the blade root section and at the end face of the trailing connecting section of the main girder in the radial blade, and the flange disc resting on the metal disc is securely connected to the main girder having the metal disc through the bolts.

**5.** The segmented wind rotor blade for wind turbine genertor system according to claim 4, **characterized in that**, the metal disc has a thickness and is provided with inner dentation, the number of which is less than the number of the inner grooves in the end face of the main girder having the metal disc, and the inner dentation of the metal disc are aligned with a bulge between two adjacent inner grooves in the end face of the main girder having the metal disc.

**6.** The segmented wind rotor blade for wind turbine genertor system according to claim 1, **characterized in that**, the main girder is made from the composite material based on a carbon-fiber-reinforced body and resin.

**7.** A segmented wind rotor blade for wind turbine genertor system, **characterized in that**, it comprises an blade root section close to a side of a hub and one radial blade, wherein the blade root section and the radial blade are connected end to end via main girders connecting one by one which embedded into the both of the blade root section and the radial blade; the end of the main girder in the blade root section far away from the hub is a connecting section of the main girder, in which the connecting section is hollow and the inner wall of the connecting section is formed along the spanwise of the wind rotor blade with inner grooves; the end of the main girder in the radial blade close to the hub is a leading connecting section extending beyond the end face of the radial blade, wherein the outer perimeter of the leading connecting section is formed along the spanwise of the wind rotor blade with outer dentation; the leading connecting section of the main girder in the radial blade is inserted into the connecting section of the main girder in the blade root section, so that the outer dentation of the leading connecting section are engaged with the inner grooves of the connecting section of the main girder in the blade root section; a flange disc is embedded at the leading connecting section of the radial blade and securely connected to the main girder of the radial blade, wherein a plurality of bolts are embedded at the end faces of the connecting section of the main girder in the blade root section and the flange disc is securely connected to the bolts via nuts; and an external shell is provided at the joint between the blade root section and the radial blade.

**8.** The segmented wind rotor blade for wind turbine genertor system according to claim 7, **characterized in that**, the cross-section of the connecting section of the main girder in the blade root section is the same in shape as the cross-section of the leading connecting section of the main girder in the radial blade; and the cross-section of the leading connecting section is "C" shape, "D" shape or "O" shape, and the cross-section of the connecting section of the main girder in the blade root section is "C" shape, "D" shape or "O" shape.

**9.** The segmented wind rotor blade for wind turbine genertor system according to claim 8, **characterized in that**, the shapes of the inner grooves of the connecting section of the main girder in the blade root section are the same as the shapes of the outer dentation of the leading connecting section of the main girder in the radial blade, wherein the inner grooves of the connecting section of the main girder in the blade root section are involute-shaped, triangular, rectangular or trapezoidal grooves.

**10.** The segmented wind rotor blade for wind turbine genertor system according to claim 7, **characterized in that**, a metal disc for guiding is provided at the end face of the connecting section of the main girder in the blade root section, and the flange disc resting on the metal disc is securely connected to the main girder having the metal disc through the bolts.

**11.** The segmented wind rotor blade for wind turbine genertor system according to claim 10, **characterized in that**, the metal disc has a thickness and is provided with inner dentation, the number of which is less than the number of the inner grooves in the end face of the main girder having the metal disc, and the inner dentation of the metal disc are aligned with a bulge between two adjacent inner grooves in the end face of the main girder having the metal disc.

**12.** The segmented wind rotor blade for wind turbine genertor system according to claim 7, **characterized in that**, the main girder is made from the composite material based on a carbon-fiber-reinforced body and resin.

**13.** A method for assembling the segmented wind rotor blade for wind turbine genertor system according to claim 1, **characterized in that**, the assembling method comprises steps of:
(1) providing a surface roughness treatment to the outer dentation and the inner grooves of the main girders in the blade root section and each radial blade;
(2) inserting the leading connecting section of the main girder in the radial blade adjacent to the blade root section into the connecting section of the main girder in the blade root section, so that the inner grooves of the connecting section in the blade root section are engaged with the outer dentation of the leading connecting section of the adjacent radial blade, and inserting the leading connecting section of the main girder in the radial blade into the trailing connecting section of the main girder in the adj acent radial blade, so that the outer dentation of the leading connecting section are engaged with the inner grooves of the trailing connecting section;
(3) bonding together the fitting faces of the outer dentation and the inner grooves of the main girders in the blade root section and each radial blade, by means of manually coating, dry forming or vacuum inj ection molding;
(4) securely connecting the flange disc to the bolts via nuts;
(5) using an external shell to envelop the gap at the joint between the blade root section and each radial blade.
